# EUROPEAN PATENT APPLICATION

(11) **EP 4 397 483 A1**
(43) Date of publication of application: **10.07.2024**
(21) Application number: 22864251.8
(22) Date of filing: 17.08.2022
(51) Int. Cl.: B32B 25/18, C09J 4/04, B60C 5/14, B60C 19/00

(54) **MULTILAYER BODY, METHOD FOR PRODUCING MULTILAYER BODY, AND TIRE**

(30) Priority: 31.08.2021 JP 2021140757
(71) Applicant: The Yokohama Rubber Co., Ltd., Hiratsuka-shi, Kanagawa 254-8601 (JP)
(72) Inventor: AKIYAMA Hisae, Hiratsuka-shi, Kanagawa 254-8601 (JP); OKAMATSU Takahiro, Hiratsuka-shi, Kanagawa 254-8601 (JP); NARUSE Masahiro, Hiratsuka-shi, Kanagawa 254-8601 (JP)
(74) Representative: Dilg, Haeusler, Schindelmann Patentanwaltsgesellschaft mbH
(86) International application number: PCT/JP2022/031035
(87) International publication number: WO 2023/032666

(57) **Abstract**

The present invention aims to provide a multilayer body of vulcanized rubbers, the multilayer body exhibiting excellent adhesion stability, a method for producing the multilayer body, and a tire including the multilayer body. A multilayer body of the present invention includes a first layer made of vulcanized rubber, an adhesive layer made of a cured product of a cyanoacrylate-based adhesive, a second layer made of vulcanized rubber, and a sensor layer including a sensor, in this order. The cured product has a softening point of 71°C or higher.

## Description

### Technical Field

The present invention relates to a multilayer body, a method for producing a multilayer body, and a tire.

### Background Art

In the related art, a multilayer body in which vulcanized rubbers are bonded to each other with a cyanoacrylate-based adhesive has been known (for example, Patent Document 1).

### Citation List

### Patent Literature

Patent Document 1: WO 2020/022160

### Summary of Invention

### Technical Problem

In Patent Document 1, an innerliner of a tire and a sensor unit are bonded with a cyanoacrylate-based adhesive (instantaneous adhesive). In this case, an intermittent load is applied between the innerliner and the sensor unit due to rotation of the tire, or the like.

The present inventors have studied a multilayer body in which vulcanized rubbers are bonded to each other with a cyanoacrylate-based adhesive, and have found that the vulcanized rubber may peel off when the intermittent load as described above is applied. That is, it has been found that the adhesion stability may become insufficient.

Therefore, in view of the above situations, an object of the present invention is to provide a multilayer body of vulcanized rubbers, the multilayer body exhibiting excellent adhesion stability, a method for producing the multilayer body, and a tire including the multilayer body.

### Solution to Problem

As a result of intensive studies to solve the above-described problems, the present inventors have found that the use of a cyanoacrylate-based adhesive having a softening point after curing within a specific range leads to a critical improvement in adhesion stability, leading to the present invention.

In other words, the present inventors have found that the above-described problem can be solved by the following configurations.
(1) A multilayer body including a first layer made of vulcanized rubber, an adhesive layer made of a cured product of a cyanoacrylate-based adhesive, a second layer made of vulcanized rubber, and a sensor layer including a sensor, in this order, in which the cured product has a softening point of 71°C or higher.
(2) The multilayer body according to (1) above, in which cyanoacrylate in the cyanoacrylate-based adhesive includes alkyl cyanoacrylate.
(3) The multilayer body according to (1) or (2) above, in which the vulcanized rubber in the first layer is a vulcanizate of butyl rubber or halogenated butyl rubber.
(4) The multilayer body according to any one of (1) to (3) above, in which the vulcanized rubber in the second layer is a vulcanizate of at least one selected from the group consisting of natural rubber, isoprene rubber, butadiene rubber, styrene-butadiene rubber, butyl rubber, halogenated butyl rubber, chloroprene rubber, and acrylonitrile-butadiene rubber.
(5) A method for producing a multilayer body, the method including: obtaining the multilayer body according to any one of (1) to (4) above by bonding the first layer and the second layer holding the sensor layer using the cyanoacrylate-based adhesive.
(6) The method for producing a multilayer body according to (5) above, in which trichloroisocyanuric acid is applied to a surface of the first layer or the second layer before bonding the first layer and the second layer using the cyanoacrylate-based adhesive.
(7) A tire including the multilayer body according to any one of (1) to (4) above.

### Advantageous Effects of Invention

As described below, according to the present invention, it is possible to provide a multilayer body of vulcanized rubbers, the multilayer body exhibiting excellent adhesion stability, a method for producing the multilayer body, and a tire including the multilayer body.

### Brief Description of Drawings

FIG. 1 is a cross-sectional view of a multilayer body of an embodiment of the present invention.
FIG. 2 is a cross-sectional view of a tire of an embodiment of the present invention.
FIG. 3 is a partially enlarged view of FIG. 1.

### Description of Embodiments

A multilayer body according to an embodiment of the present invention, a method for producing a multilayer body according to an embodiment of the present invention, and a tire according to an embodiment of the present invention will be described below.

Note that in the present specification, value ranges indicated using "from ... to ..." or "of ... to ..." mean ranges including the value before "to" as a lower limit value and the value after "to" as an upper limit value.

For each component, one type may be used alone, or a combination of two or more types may be used. Here, when two or more types for each of the components are used in combination, the content of the corresponding component refers to the total content unless otherwise specified.

### Multilayer Body

A multilayer body of the present invention includes a first layer made of vulcanized rubber, an adhesive layer made of a cured product of a cyanoacrylate-based adhesive, a second layer made of vulcanized rubber, and a sensor layer including a sensor, in this order, in which the cured product has a softening point of 71°C or higher.

### Description With Reference to Drawings

First, a multilayer body according to an embodiment of the present invention will be described with reference to the drawings.

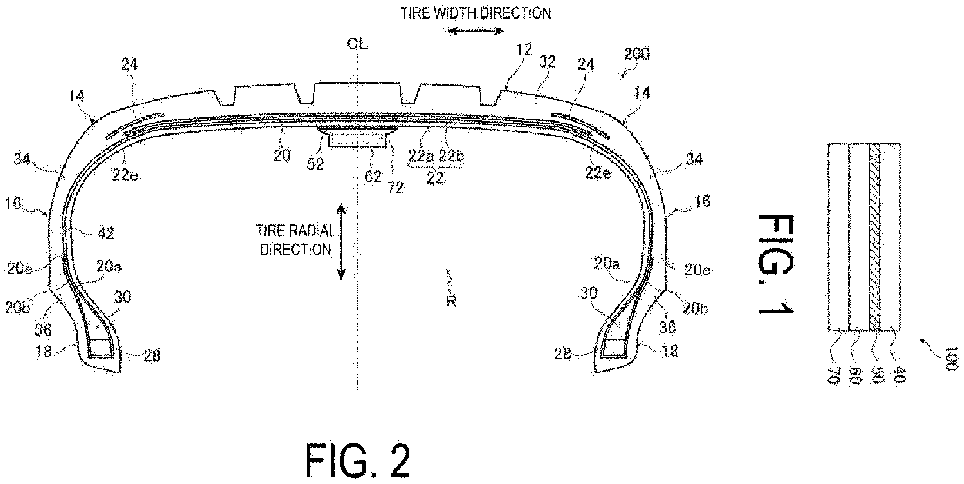

FIG. 1 is a cross-sectional view of a multilayer body of an embodiment of the present invention.

A multilayer body 100 illustrated in FIG. 1 is a multilayer body including a first layer 40 made of vulcanized rubber, an adhesive layer 50 made of a cured product (having a softening point of 71°C or higher) of a cyanoacrylate-based adhesive, a second layer 60 made of vulcanized rubber, and a sensor layer 70 including a sensor, in this order.

Each layer constituting the multilayer body according to an embodiment of the present invention will be described below.

### First Layer

As described above, the multilayer body of the present invention includes the first layer made of vulcanized rubber.

The first layer made of vulcanized rubber is not particularly limited as long as it is a layer made of vulcanized rubber (vulcanized rubber).

The vulcanized rubber is not particularly limited, and specific examples thereof may include vulcanizates of natural rubber (NR), butadiene rubber (BR), aromatic vinyl-conjugated diene rubber, isoprene rubber (IR), acrylonitrile-butadiene rubber (NBR), butyl rubber (IIR), halogenated butyl rubber (for example, brominated butyl rubber (BIIR), chlorinated butyl rubber (CIIR)), and chloroprene rubber (CR), and the like. Examples of the aromatic vinyl-conjugated diene copolymer rubber may include styrene-butadiene rubber (SBR), styrene-isoprene rubber, and the like.

From the perspective of achieving superior effects of the present invention, the vulcanized rubber is preferably a vulcanizate of butyl rubber or halogenated butyl rubber.

### Adhesive Layer

As described above, the multilayer body of the present invention includes an adhesive layer made of a cured product of a cyanoacrylate-based adhesive. Here, the cured product has a softening point of 71°C or higher.

### Cyanoacrylate-Based Adhesive

The cyanoacrylate-based adhesive is an adhesive containing cyanoacrylate.

The cyanoacrylate is not particularly limited as long as it is ester of cyanoacrylic acid.

From the perspective of achieving superior effects of the present invention, the cyanoacrylate is preferably an alkyl ester of cyanoacrylic acid (alkyl cyanoacrylate).

The number of carbon atoms of an alkyl group of the alkyl cyanoacrylate is not particularly limited, but from the perspective of achieving superior effects of the present invention, the number of carbon atoms is preferably 1 to 5, more preferably 1 to 3, even more preferably 1 to 2, and particularly preferably 2. That is, from the perspective of achieving superior effects of the present invention, the alkyl cyanoacrylate is preferably methyl cyanoacrylate or ethyl cyanoacrylate, and more preferably ethyl cyanoacrylate.

From the perspective of achieving superior effects of the present invention, the content of cyanoacrylate in the cyanoacrylate-based adhesive is preferably 50 mass% or more, more preferably 70 mass% or more, and even more preferably 90 mass% or more. The upper limit of the content of cyanoacrylate in the cyanoacrylate-based adhesive is not particularly limited and is 100 mass%.

### Cured Product

The cyanoacrylate-based adhesive usually reacts with moisture in the air to be cured (polymerized).

### Softening Point

The softening point of the cured product of the cyanoacrylate-based adhesive is 71°C or higher.

From the perspective of achieving superior effects of the present invention, the softening point of the cured product is preferably 80°C or higher, more preferably 90°C or higher, even more preferably 100°C or higher, particularly preferably 110°C or higher, and most preferably 120°C or higher. The upper limit of the softening point of the cured product is not particularly limited, but from the perspective of achieving superior effects of the present invention, the upper limit is preferably 200°C or lower, more preferably 190°C or lower, even more preferably 180°C or lower, even more preferably 170°C or lower, particularly preferably 160°C or lower, and most preferably 150°C or lower.

Note that the softening point is a Vicat softening temperature measured in accordance with JIS K7206.

A method for adjusting the softening point of the cured product to a desired range is not particularly limited, and examples thereof may include a method of adjusting the number of carbon atoms of the alkyl group of the alkyl cyanoacrylate, and the like.

### Second Layer

As described above, the multilayer body of the present invention includes the second layer made of vulcanized rubber.

The second layer made of vulcanized rubber is not particularly limited as long as it is a layer made of vulcanized rubber (vulcanized rubber).

Specific examples of the vulcanized rubber are the same as those of the first layer described above, but from the perspective of achieving superior effects of the present invention, the vulcanized rubber is preferably a vulcanizate of at least one selected from the group consisting of natural rubber, isoprene rubber, butadiene rubber, styrene-butadiene rubber, butyl rubber, halogenated butyl rubber, chloroprene rubber, and acrylonitrile-butadiene rubber, more preferably a vulcanizate including at least natural rubber, and even more preferably a vulcanizate of a mixture of natural rubber and butadiene rubber. When the vulcanized rubber is a vulcanizate including natural rubber, the content of the natural rubber is preferably 50 mass% or more, more preferably 70 mass% or more, and even more preferably 90 mass% or more from the perspective of achieving superior effects of the present invention.

### Sensor Layer

As described above, the multilayer body of the present invention includes the sensor layer including a sensor (detector).

The sensor layer preferably consists of a mechanical component coated with resin or metal.

The sensor layer preferably includes a housing and an electronic component. The housing has a hollow structure, and the electronic component is preferably housed inside of the housing.

The electronic component is preferably configured to include a sensor for acquiring information, a transmitter, a receiver, a control circuit, a battery, and the like.

When the multilayer body of the present invention is used for a tire, specific examples of the sensor may include a temperature sensor for measuring an internal temperature, a pressure sensor for measuring an internal pressure, a sensor for detecting a wear amount of a tread portion, and the like.

### Production Method

A method for producing the multilayer body of the present invention is not particularly limited, and examples thereof may include a method of bonding the above-described first layer and the above-described second layer using the above-described cyanoacrylate-based adhesive. Here, the sensor layer is held by the second layer.

In the above-described method, from the perspective of achieving superior effects of the present invention, trichloroisocyanuric acid (chlorinating agent) is preferably applied to a surface of the first layer or the second layer before bonding the first layer and the second layer using the cyanoacrylate-based adhesive. The trichloroisocyanuric acid has an effect of improving adhesion.

A method for holding the sensor layer by the second layer is not particularly limited, and examples thereof may include a method of bonding the second layer and the sensor layer using an adhesive, a method of using a container made of vulcanized rubber as the second layer and housing the sensor layer (for example, an electronic component including a sensor) in the container, and the like.

### Tire

The tire according to an embodiment of the present invention is a tire including the multilayer body according to the embodiment of the present invention described above.

The tire according to an embodiment of the present invention will be described hereinafter with reference to the drawings.

FIG. 2 is a cross-sectional view of a tire (pneumatic tire) of an embodiment of the present invention.

A tire 200 illustrated in FIG. 2 includes a tread portion 12, shoulder portions 14, sidewall portions 16, and bead portions 18 as major constituent portions.

Note that, in the following description, as indicated by arrows in FIG. 2, "tire width direction" refers to the direction parallel with a rotation axis (not illustrated) of the tire, and "tire radial direction" refers to the direction orthogonal to the rotation axis. "Tire circumferential direction" refers to the rotating direction with the rotation axis as the axis at the center of rotation.

Further, "tire inner side" refers to a lower side of the tire in the tire radial direction of FIG. 2, that is, an inner surface side of the tire facing a cavity region R that gives a predetermined internal pressure to the tire, and "tire outer side" refers to an upper side of the tire in FIG. 2, that is, an outer surface side of the tire visible to a user on a side opposite to an inner circumferential surface of the tire. A reference sign CL of FIG. 2 denotes a tire equatorial plane. The tire equatorial plane CL is a plane orthogonal to the rotation axis of the tire 200 and passing through a center of a tire width of the tire 200.

The tire 200 mainly includes a carcass layer 20, a belt layer 22, an auxiliary belt-reinforcing layer 24, bead cores 28, bead fillers 30, a tread rubber layer 32 forming the tread portion 12, sidewall rubber layers 34 forming the sidewall portions 16, rim cushion rubber layers 36, and an innerliner 42 provided on the inner circumferential surface of the tire. The innerliner 42 is made of vulcanized rubber.

In the bead portions 18, a pair of left and right bead cores 28 functioning to fix the tire 200 to a wheel is provided, while the carcass layer 20 is folded back around the pair of bead cores 28. Additionally, the bead fillers 30 are also provided in the bead portions 18 in such a manner as to contact the bead cores 28. Therefore, the bead core 28 and the bead filler 30 are sandwiched by a body portion 20a and a folded back portion 20b of the carcass layer 20.

The carcass layer 20 extends from a portion corresponding to the tread portion 12 in the tire width direction through portions corresponding to the shoulder portions 14 and the sidewall portions 16 to the bead portions 18 to form a skeleton of the tire 200.

The carcass layer 20 has such a configuration that reinforcing cords are arranged and coated with cord coating rubber. The carcass layer 20 has end portions 20e at the sidewall portions 16 by being folded back around the pair of left and right bead cores 28 from the tire inner side to the tire outer side, such that the body portion 20a and the folded back portions 20b are delimited by the bead cores 28. That is, in the present embodiment, the carcass layer 20 is provided as one layer between the pair of left and right bead portions 18. The number of carcass layers 20 is not limited to one layer, and may be a plurality of layers depending on the structure and application.

In addition, the carcass layer 20 may be made of one sheet material or a plurality of sheet materials. When the carcass layer 20 is made of a plurality of sheet materials, the carcass layer 20 has a joint portion (splice portion).

Organic fiber cords of the carcass layer 20 are formed of, for example, polyethylene terephthalate (PET), polyethylene naphthalate (PEN), rayon, nylon, or the like.

As the cord coating rubber of the carcass layer 20, one or more types of rubber selected from natural rubber (NR), styrene-butadiene rubber (SBR), butadiene rubber (BR), and isoprene rubber (IR) are preferably used.

A container 62 made of vulcanized rubber is bonded to the innerliner 42 of the tire 200 via an adhesive layer 52. The adhesive layer 52 is an adhesive layer made of a cured product (having a softening point of 71°C or higher) of a cyanoacrylate-based adhesive. In the container 62 made of vulcanized rubber, a sensor 72 is housed.

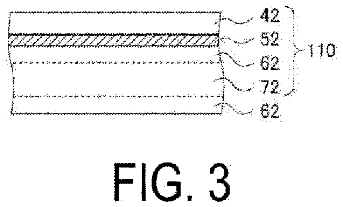

FIG. 3 is a partially enlarged view of FIG. 1.

As illustrated in FIGS. 2 and 3, the tire 200 is a tire including a multilayer body 110 including a first layer (innerliner 42) made of vulcanized rubber, an adhesive layer 52 made of a cured product (having a softening point of 71°C or higher) of a cyanoacrylate-based adhesive, a second layer made of vulcanized rubber (part of the container 62 made of vulcanized rubber), and a sensor layer (sensor 72) including a sensor, in this order.

The tire is preferably a pneumatic tire, and can be filled with air, inert gas such as nitrogen, or other gases.

### Example

An embodiment of the present invention will be described in further detail below by way of examples. However, an embodiment of the present invention is not limited to these examples.

### Multilayer Body

### Production of Multilayer Body

The vulcanized rubber described in the column of first layer in Table 1 and the vulcanized rubber described in the column of second layer in Table 1 were prepared. Note that the vulcanized rubber (second layer) holds a sensor layer including a sensor.

The prepared vulcanized rubber (first layer) and vulcanized rubber (second layer) were bonded using an adhesive described in the column of adhesive in Table 1.

In this manner, each multilayer body including the first layer made of the vulcanized rubber, the adhesive layer made of a cured product of the adhesive, the second layer made of the vulcanized rubber, and the sensor layer including the sensor, in this order, was obtained.

### 90° Peel Test

For each of the obtained multilayer bodies, the second layer was peeled from the first layer by using a 90° peel test, and a failure state of the peeled surface was visually confirmed.

The results are shown in Table 1. MF represents material failure of the vulcanized rubber and CF represents cohesive failure of the adhesive layer. MF can be said to be excellent in adhesion.

### [Tire]

### Production of Tire

A tire having an innerliner formed of vulcanized rubber described in the column of first layer in Table 1 was prepared. In addition, a container formed of vulcanized rubber (container made of vulcanized rubber) described in the column of second layer in Table 1 was prepared. Note that an electronic component including a sensor is housed in the container made of vulcanized rubber.

An adhesive described in the column of adhesive in Table 1 was applied to the innerliner of the prepared tire, and the container made of vulcanized rubber was bonded thereto.

In this way, each tire including a multilayer body including a first layer (innerliner) made of vulcanized rubber, an adhesive layer made of a cured product of an adhesive, a second layer made of vulcanized rubber (part of the container made of vulcanized rubber), and a sensor layer including a sensor (electronic component including a sensor), in this order, as illustrated in FIGS. 2 and 3 was obtained.

### Tire Running Test

Each of the obtained tires was mounted on a wheel having a rim size of 21×9.5J, and a running test was performed by using a drum testing machine (air pressure of 120 kPa, 102% of maximum load, running speed of 81 km/h, and running distance of 10,000 km). The state of the container made of vulcanized rubber after the running test was visually confirmed, and the adhesion stability was evaluated in accordance with the following criteria.

The results are shown in Table 1. From the perspective of adhesion stability, "○" or "△" is preferable, and "○" is more preferable.
○: Hardly any peeling between the innerliner and the container made of vulcanized rubber was observed.
△: Slight peeling between the innerliner and the container made of vulcanized rubber was observed.
×: Significant peeling between the innerliner and the container made of vulcanized rubber was observed.

**Table 1**

| Table 1 | Example 1 | Example 2 | Example 3 | Example 4 | Example 5 | Example 6 | Example 7 | Example 8 | Example 9 | Comparative Example 1 |
|---|---|---|---|---|---|---|---|---|---|---|
| First layer | BIIR | BIIR | BIIR | BIIR | BIIR | IIR | IIR | IIR | BIIR | BIIR |
| Adhesive | Adhesive 1 | Adhesive 2 | Adhesive 3 | Adhesive 2 | Adhesive 2 | Adhesive 2 | Adhesive 2 | Adhesive 2 | Adhesive 5 | Adhesive 4 |
| Second layer | NR/BR | NR/BR | NR/BR | NR/SBR | BIIR | NR/BR | CR | NBR | NR/BR | NR/BR |
| Softening Point (°C) | 145 | 145 | 110 | 145 | 145 | 145 | 145 | 145 | 165 | 60 |
| 90° Peel test | MF | MF | MF | MF | MF | MF | MF | MF | MF | CF |
| Tire running test | ○ | ○ | Δ | ○ | ○ | ○ | ○ | ○ | Δ | × |

### Vulcanized Rubber

In Table 1, the vulcanized rubbers described in the columns of first layer and second layer are as follows.
- BIIR: brominated butyl rubber (vulcanizate)
- IIR: butyl rubber (vulcanizate)
- NR/BR: natural rubber/butadiene rubber = 95/5 (mass ratio) (vulcanizate)
- NR/SBR: natural rubber/styrene-butadiene rubber = 40/60 (mass ratio) (vulcanizate)
- CR: chloroprene rubber (vulcanizate)
- NBR: acrylonitrile-butadiene rubber (vulcanizate)

### Adhesive

In Table 1, the adhesives described in the column of adhesive are as follows.
- Adhesive 1: Cyanon SR, cyanoacrylate-based adhesive (ethyl cyanoacrylate), manufactured by KOATSU GAS KOGYO CO., LTD., softening point of cured product: 145°C
- Adhesive 2: Aron Alpha Extra 2000, cyanoacrylate-based adhesive (ethyl cyanoacrylate), manufactured by TOAGOSEI CO., LTD., softening point of cured product: 145°C
- Adhesive 3: Aron Alpha 602PF, cyanoacrylate-based adhesive, manufactured by TOAGOSEI CO., LTD., softening point of cured product: 110°C
- Adhesive 4: Aron Alpha 802, cyanoacrylate-based adhesive, manufactured by TOAGOSEI CO., LTD., softening point of cured product: 60°C
- Adhesive 5: Aron Alpha 101, cyanoacrylate-based adhesive (methyl cyanoacrylate), manufactured by TOAGOSEI CO., LTD., softening point of cured product: 165°C

Note that in Table 1, the column of softening point shows the softening point (°C) of the cured product of the adhesive.

As can be seen from Table 1, Examples 1 to 9 in which a cyanoacrylate-based adhesive having a softening point after curing of 71°C or higher was used exhibited excellent adhesion stability as compared with Comparative Example 1 in which a cyanoacrylate-based adhesive having a softening point after curing of lower than 71°C was used. Among them, Examples 1 and 2 and Examples 4 to 8 in which a cyanoacrylate-based adhesive having a softening point after curing of 120 to 160°C was used exhibited more excellent adhesion stability.

### Reference Signs List

12 Tread portion
14 Shoulder portion
16 Sidewall portion
18 Bead portion
20 Carcass layer
20a Body portion of carcass layer 20
20b Folded back portion of carcass layer 20
20e End portion of carcass layer 20
22 Belt layer
22a Inner belt layer
22b Outer belt layer
22e End portion of belt layer 22
24 Auxiliary belt-reinforcing layer
28 Bead core
30 Bead filler
32 Tread rubber layer
34 Sidewall rubber layer
36 Rim cushion rubber layer
40 First layer made of vulcanized rubber
42 Innerliner
50, 52 Adhesive layer
60 Second layer made of vulcanized rubber
62 Container made of vulcanized rubber
70 Sensor layer including a sensor
72 Electronic component including a sensor
100, 110 Multilayer body
200 Tire (pneumatic tire)

## Claims

1. A multilayer body comprising:
a first layer made of vulcanized rubber;
an adhesive layer made of a cured product of a cyanoacrylate-based adhesive;
a second layer made of vulcanized rubber; and
a sensor layer comprising a sensor, in this order,
the cured product having a softening point of 71°C or higher.

2. The multilayer body according to claim 1, wherein cyanoacrylate in the cyanoacrylate-based adhesive comprises alkyl cyanoacrylate.

3. The multilayer body according to claim 1 or 2, wherein the vulcanized rubber in the first layer is a vulcanizate of butyl rubber or halogenated butyl rubber.

4. The multilayer body according to any one of claims 1 to 3, wherein the vulcanized rubber in the second layer is a vulcanizate of at least one selected from the group consisting of natural rubber, isoprene rubber, butadiene rubber, styrene-butadiene rubber, butyl rubber, halogenated butyl rubber, chloroprene rubber, and acrylonitrile-butadiene rubber.

5. A method for producing a multilayer body, the method comprising:
obtaining the multilayer body according to any one of claims 1 to 4 by bonding the first layer and the second layer holding the sensor layer using the cyanoacrylate-based adhesive.

6. The method for producing a multilayer body according to claim 5, wherein trichloroisocyanuric acid is applied to a surface of the first layer or the second layer before bonding the first layer and the second layer using the cyanoacrylate-based adhesive.

7. A tire comprising the multilayer body according to any one of claims 1 to 4.
